# FASCICULE DE BREVET EUROPEEN

(11) **EP 0 879 087 B1**
(45) Date de publication et mention de la délivrance du brevet: **21.11.2001**
(21) Numéro de dépôt: 97904500.2
(22) Date de dépôt: 06.02.1997
(51) Int. Cl.: B03C 1/23, B03C 1/035, C22B 9/02

(54) **PROCEDE ET DISPOSITIF DE SEPARATION DE PARTICULES CONTENUES DANS UN ECOULEMENT DE LIQUIDE ELECTRO-CONDUCTEUR A L'AIDE DE FORCES ELECTROMAGNETIQUES**
TRENNUNGSVERFAHREN UND -APPARAT VON TEILCHEN AUS EINEM ELEKTRISCH LEITENDEN FLÜSSIGKEITSTROM UNTER VERWENDUNG ELEKTROMAGNETISCHER KRÄFTE
METHOD AND DEVICE FOR SEPARATING PARTICLES FROM AN ELECTRICALLY CONDUCTIVE LIQUID FLOW USING ELECTROMAGNETIC FORCES

(30) Priorité: 07.02.1996 FR 9601711
(43) Date de publication de la demande: 25.11.1998
(73) Titulaire: CENTRE NATIONAL DE LA RECHERCHE SCIENTIFIQUE, 75016 Paris Cédex (FR)
(72) Inventeur: PILLIN, Béatrice, F-38330 Echirolles (FR); GILLON, Pascale, F-38100 Grenoble (FR); BEAUGON, Eric, F-38610 Gières (FR)
(74) Mandataire: Marsolais, Richard
(86) Numéro de dépôt international: FR9700235
(87) Numéro de publication internationale: WO9728901

(56) Documents cités:
- EP-A- 0 290 360
- DE-A- 2 037 088
- FR-A- 2 641 983
- US-A- 4 786 320

## Description

### DOMAINE TECHNIQUE

Le domaine de l'invention concerne la séparation d'inclusions (solides, liquides, gazeuses) non miscibles contenues dans un écoulement de liquide conducteur électrique, les particules ayant une conductivité électrique différente de celle du liquide, à l'aide de forces électromagnétiques obtenues au moyen d'un champ magnétique statique, en particulier les inclusions contenues dans une veine de métal liquide, par exemple l'aluminium.

### ETAT DE LA TECHNIQUE

Il est connu, par exemple du brevet FR 2614801, un procédé de séparation d'inclusions contenues dans un métal liquide qui consiste à appliquer à un milieu filtrant (par exemple masse poreuse, lit de granulat, bougie filtrante...) traversé par le métal liquide un champ de forces électromagnétiques obtenues :
- soit à l'aide d'un courant continu passant dans le métal liquide en cours de filtration et dirigé parallèlement au flux de métal liquide; les forces électromagnétiques opérant la migration des inclusions vers les parois délimitant les pores du milieu filtrant résultent de l'action du champ magnétique statique, créé par le courant continu sur le courant continu lui-même,
- soit à l'aide d'un courant continu et d'un champ magnétique statique perpendiculaire à la direction de filtration: dans ce cas des forces électromagnétiques statiques résultent également de l'action du champ magnétique statique sur le courant continu.

Il est également connu du brevet US 4909836 ou du document J.of - Metals. vol.47 number 5 p.46 (Mai 1995) un procédé de séparation des inclusions d'un métal liquide par action d'un champ magnétique alternatif sur un flux de métal liquide traversant une chambre comportant des canaux longitudinaux séparés par des baffles; cette configuration de canaux a pour but de contrarier et atténuer les effets de brassage ou de convection qui se produisent uniquement avec l'emploi d'un champ alternatif; les inclusions de plus de 40 µm sont récupérées sur les baffles ou les parois de la chambre; le métal ainsi traité passe ensuite dans un filtre qui récupère les inclusions plus petites.

Il est encore connu du brevet DE 2037088 (équivalent du brevet GB 1317736), de dévier des particules conductrices non contenues dans un milieu conducteur selon leur conductivité électrique, en leur faisant traverser des gradients de champ magnétique. Quand le champ est désaxé les particules les plus conductrices sont les plus déviées, les particules isolantes n'étant pas déviées. Quand le champ est axé les plarticules les plus conductrices sont les plus freinées et elles sont déviées à la sortie du champ à l'aide d'un jet de fluide perpendiculaire à leur trajectoire ; les particules les moins conductrices, qui sont les moins freinées, sont également les moins déviées.

Il est encore connu du brevet US 4786320 la séparation d'inclusions par l'action simultanée d'un champ magnétique et d'un courant en créant au sein du liquide des forces de Lorentz. On peut utilliser un champ magnétique continu et faire circuler un courant dans le métal à l'aide d'électrode, comme dans le brevet FR 2614801, cité plus haut. Mais l'emploi d'un champ magnétique alternatif est préféré car un courant alternatif est alors directement induit dans le métal. Les inclusions sont récupérées à l'aide de moyens spécifiques.

Il est encore connu du brevet FR 2641983 un filtre électromagnétique dans lequel la séparation de particules à faible ou forte susceptibilité magnétique en suspension dans un fluide est effectuée grâce exclusivement à des forces magnétiques sur des particules magnétisables, celles-ci étant attirées des zones à faible champ vers les zones à fort champ.

Il est par ailleurs connu, par exemple par le brevet US 5238051, de couler en continu des brames d'acier à section rectangulaire en présence d'un champ magnétique continu statique appliqué en général au niveau du moule; ce champ a nécessairerment une direction perpendiculaire au flux de métal liquide et sert à diminuer la vitesse d'introduction dudit métal liquide dans le moule de coulée et dans le puits de solidification de la brame en cours de solidification. Un tel procédé, s'il permet par certains aspects d'améliorer la qualité du métal coulé, se limite à éviter que les inclusions solides polluantes soient entraînées profondément dans le puits de solidification avec le jet de métal liquide. Ainsi les inclusions se décantent plus facilement grâce à la densité élevée de l'acier liquide et se concentrent plutôt en surface de la brame à tel point que pour les éliminer il est généralement nécessaire, après solidification, d'ôter une couche extérieure de métal.
Une telle décantation ne se produit pratiquement pas avec l'aluminium liquide parce qu'il a une densité beaucoup plus faible et que le puits de solidification est beaucoup moins profond (de l'ordre au moins de 10 fois).

Les champs appliqués sont habituellement inférieurs à 0,4 T, les forces électromagnétiques appliquées au métal liquide s'exercent dans le sens opposé à celui de son écoulement.

La demanderesse a cherché à simplifier la séparation des inclusions d'un métal liquide en évitant l'emploi de milieux filtrants qui ne sont jamais simples à mettre en oeuvre et dont l'efficacité est aléatoire surtout pour les plus petites inclusions, en raison de problèmes de colmatage et de relargage desdites inclusions.
Elle a de plus cherché à diminuer la quantité d'inclusions présentes dans le métal liquide après que celui-ci ait subi les procédés de filtration connus, tout en évitant l'emploi malaisé de courant électrique d'origine extérieure traversant ledit métal liquide.
Et elle a encore cherché à séparer les inclusions les plus petites, celles qui n'ont pas été retenues par les procédés connus de filtration, en particulier celles inférieures à 40 µm, donc à améliorer la qualité du métal liquide.

### DESCRIPTION DE L'INVENTION

Un premier aspect de l'invention est un procédé de séparation des inclusions contenues dans un écoulement liquide conducteur électrique, les inclusions et le liquide ayant des conductivités électriques différentes, à l'aide de forces électromagnétiques caractérisé en ce qu'on soumet ledit écoulement à un flux magnétique hétérogène dans l'espace, ledit flux magnétique résultant d'un champ magnétique statique continu.

Le procédé permet ainsi de dévier toutes les inclusions dans une même direction en général radiale au sein du liquide en mouvement, habituellement confiné dans une enceinte appropriée, ce qui permet de les concentrer dans une zone de l'écoulement, généralement en bordure, et de les récupérer dans cette zone, le reste de l'écoulement étant ainsi débarrassé d'inclusions.

Le procédé s'applique à tous les métaux liquides (y compris les aciers, le cuivre...), mais en particulier aux métaux ou liquides légers tels que l'aluminium, le magnésium, le sodium et leurs alliages, et encore aux solutions salines aqueuses, sels fondus...où leur faible densité a peu d'effet sur la séparation des inclusions par décantation.

Les inclusions sont solides, liquides ou gazeuses et sont en général isolantes électriquement. Elles peuvent provenir de traitements antérieurs du métal liquide.
Dans le cas d'un métal liquide, le traitement selon l'invention est effectué de préférence juste avant la coulée. Un mode particulièrement intéressant est d'insérer le procédé et son dispositif au droit de la busette de coulée.
Pour que la séparation s'effectue, il importe que les forces électromagnétiques dues à l'action du champ statique continu sur le courant induit généré au sein de l'écoulement de liquide conducteur, grâce au flux magnétique variable dans l'espace, exercent une pression suffisante sur les inclusions qui se déplacent au sein dudit liquide. Il apparaît que cette séparation est totalement différente d'une décantation.

Le champ de forces électromagnétiques ne résulte donc pas, par exemple, de l'action d'un champ magnétique alternatif sur le courant induit par ledit champ magnétique alternatif dans un milieu conducteur, mais résulte du déplacement du métal conducteur dans un gradient spatial de flux magnétique continu.
De même, la déviation des inclusions ne peut pas être due à des forces électromagnétiques agissant directement sur les inclusions, forces qui résulteraient de l'action d'un champ magnétique continu sur un courant induit dans lesdites inclusions par leur déplacement dans un gradient dudit champ continu, puisque lesdites inclusions sont isolantes.

Dans le cas favorable où les inclusions sont isolantes électriquement, les forces exercées seront d'autant plus grandes et la séparation aisée.

Le champ magnétique, habituellement symétrique, est avantageusement supérieur à 1 T; mais ce qui importe le plus c'est que la variation temporelle de flux due à l'écoulement de métal liquide dans le gradient spatial de flux soit suffisante pour engendrer des forces électromagnétiques au sein du liquide conducteur permettant de dévier par réaction les inclusions jusqu'en bordure extérieure ou vers le centre dudit écoulement ou sa bordure intérieure. La variation temporelle de flux est généralement supérieure à 25.10⁻⁶ Wb/s.

Le flux magnétique hétérogène dans l'espace peut être obtenu à l'aide d'un gradient ou variation spatiale de champ magnétique dans l'écoulement. Mais il est plus avantageux de l'obtenir en faisant varier ou en modifiant la forme de la section droite de l'écoulement, le long de l'écoulement.

Pour améliorer les résultats, on peut combiner l'emploi d'un champ variable dans l'espace et d'une section droite de l'écoulement variable de façon telle que leurs effets sur les inclusions s'additionnent.

Le champ magnétique peut être obtenu à l'aide d'au moins un, ou une paire d'aimant(s) permanent(s) ou d'électro-aimant(s) à courant continu. En particulier on utilise souvent une bobine entourant ledit écoulement. Il est avantageux pour obtenir des flux de valeur suffisante d'utiliser des bobines ou électro-aimants supraconducteurs.

Dans le cas d'une bobine ceinturant l'écoulement on obtient des forces électromagnétiques permettant de dévier les inclusions dans une direction radiale perpendiculairement à la direction générale dudit écoulement.

Quand on utilise un flux hétérogène obtenu à l'aide d'un gradient spatial de champ magnétique, il est particulièrement avantageux d'opérer avec un écoulement annulaire dont la section droite est une couronne de section constante le long de l'écoulement. Cette section peut être par exemple circulaire ou rectangulaire, de façon à ce que l'écoulement se produise dans les zones où le champ magnétique et le gradient de champ sont les plus intenses et à ce que la distance radiale à parcourir par les inclusions, pour les séparer en les amenant à la périphérie extérieure ou intérieure dudit écoulement annulaire, est minimale.

La forme de la section droite de l'anneau peut être identique le long de l'écoulement mais elle peut également varier. Ce dernier mode de réalisation est en particulier adopté quand le champ magnétique est uniforme pour obtenir un flux magnétique variable dans l'espace; on peut aussi l'utiliser quand le champ magnétique présente un gradient spatial pour accroître le flux magnétique hétérogène dans le liquide et donc améliorer la séparation des inclusions. Un mode de réalisation particulièrement avantageux consiste à utiliser un écoulement de section annulaire circulaire qui a une section conique ou tronconique dans le sens de l'écoulement.

Ainsi l'écoulement à section droite de forme variable dans le sens de l'écoulement peut être obtenu en délimitant ledit écoulement à l'aide, par exemple, de deux troncs de cône de même angle au sommet emboîtés l'un dans l'autre mais en laissant un espace entre eux. Les deux troncs de cône peuvent aussi avoir des angles au sommet différents et leurs sections droites peuvent être identiques (par exemple circulaires ou carrées) ou différentes (par exemple circulaire et carrée, ovale et rectangulaire, etc...), concentriques ou non, etc...

Dans tous les cas il est important que l'écoulement évite la zone centrale du flux magnétique qui est inefficace pour séparer les inclusions.

La direction du champ est indifférente. Cependant cette direction est généralement telle que la variation de flux obtenue génère un champ de forces électromagnétiques au sein du liquide conducteur orienté dans le sens opposé à celui en direction duquel on veut que les inclusions de plus faible conductivité soient déviées.

Ainsi dans le cas d'une bobine entourant un écoulement ayant une section droite annulaire constante, les inclusions sont récupérées sur la bordure extérieure dans la mesure où le liquide se dirige d'une zone à champ moins intense vers une zone à champ intense (variation positive de flux) et inversement pour les récupérer sur la bordure intérieure ou au centre.
Dans le cas d'un écoulement conique convergent le long de l'écoulement, les inclusions sont récupérées vers l'intérieur de l'écoulement quel que soit le sens du champ, ce dernier ayant par ailleurs une direction générale dans l'axe de l'écoulement. Dans ce cas la variation spatiale de flux est négative.

En d'autres termes une variation positive de flux magnétique dans le sens de l'écoulement dévie les inclusions vers l'extérieur, alors qu'une variation négative les dévie vers l'intérieur.

Différents moyens existent pour récupérer et éliminer de l'écoulement liquide les inclusions déviées. On peut par exemple inclure en bordure de l'écoulement, dans la zone de récupération, un matériau poreux (réfractaire dans le cas du traitement des métaux liquides) qui retiendra et piègera les inclusions.

On peut également installer des déflecteurs, ou tout autre moyen de prélèvement, dans la zone de récupération pour dévier et soutirer la partie de l'écoulement chargée en inclusions déviées et récupérer par ailleurs l'autre partie épurée.

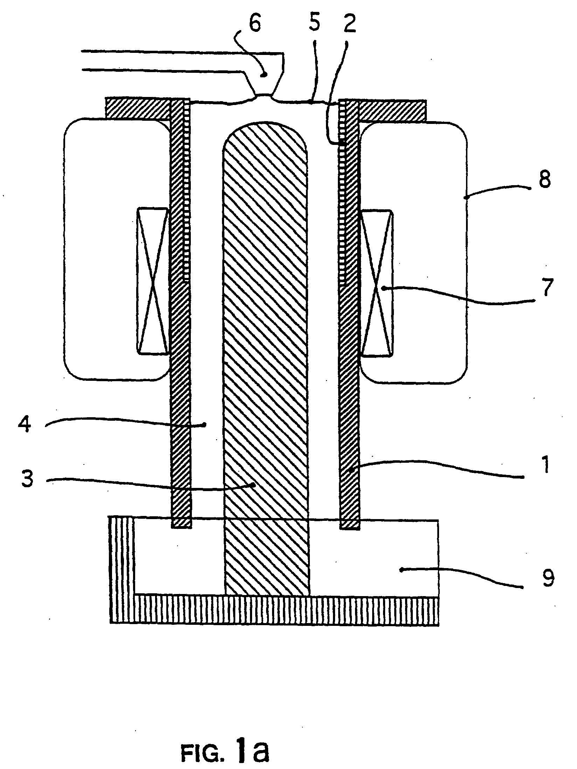

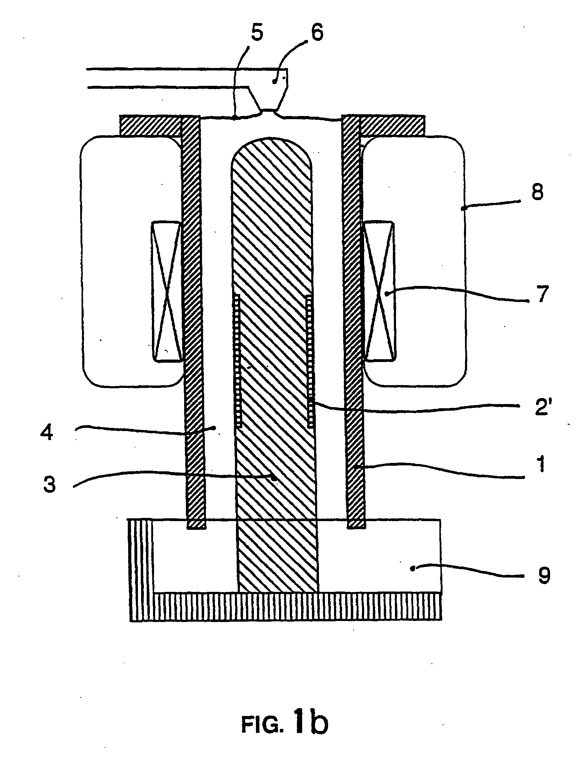

Les figures 1a et 1b permettent de mieux comprendre et illustrer l'invention.
Dans les figures 1a et 1b le chenal d'écoulement a une section annulaire circulaire de forme constante. Il comprend une enveloppe extérieure (1) et un noyau (3) situé au centre de l'enveloppe extérieure (1) de façon à former l'écoulement annulaire (4) ayant une section droite de forme constante (couronne circulaire). Il est alimenté en métal liquide, dont on voit le niveau (5), par la busette (6).
Dans la version la la récupération des inclusions est effectuée dans la partie supérieure de l'écoulement, dans une zone où la variation spatiale de flux est positive dans le sens de l'écoulement du métal liquide, à l'aide d'un revêtement réfractaire poreux (2) situé sur la face intérieure de l'enveloppe (1).
Dans la version 1b la récupération est effectuée dans la partie inférieure de l'écoulement, dans une zone où la variation de flux est négative, le revêtement réfractaire poreux (2') étant alors situé sur le noyau (3).

En (7) on voit une bobine supraconductrice dans son enveloppe cryogénique (8). Elle délivre un champ magnétique statique (H) de direction générale parallèle à l'axe de l'écoulement présentant un gradient spatial principalement à proximité des extrémités de la bobine (7).
Il se produit ainsi un flux magnétique hétérogène dans l'écoulement annulaire de section constante et le liquide conducteur est le siège d'un champ de forces électromagnétiques F agissant par réaction sur les inclusions qui sont repoussées dans la direction D (radiale extérieure ou intérieure) pour être piégées par le réfractaire poreux (2'). La force est d'autant plus élevée que la variation de flux est élevée, autrement dit que le gradient spatial de champ magnétique est élevé et que le champ est élevé, c'est-à-dire à proximité des extrémités de la bobine et de l'enveloppe extérieure du chenal. Le liquide épuré est évacué en (9).
Dans le cas d'un écoulement d'aluminium liquide comportant des inclusions électriquement isolantes de diamètre maximum 35 µm, circulant dans un écoulement annulaire circulaire d'épaisseur 20 mm et de rayon moyen constant 40 mm, situé dans une bobine (7) de hauteur 26 cm délivrant un champ magnétique de 3,5 T en son centre, selon une vitesse de 24 cm/sec (débit de 10 t/h), la surpression en amont étant d'environ 1 bar, étant de 4,5 m comptée entre (5) et (9), on observe une déviation complète des inclusions.
Le même appareillage appliqué à un écoulement de cuivre liquide contenant des inclusions de 20 µm et ayant une vitesse de 13 cm/sec donne une efficacité de 75%.

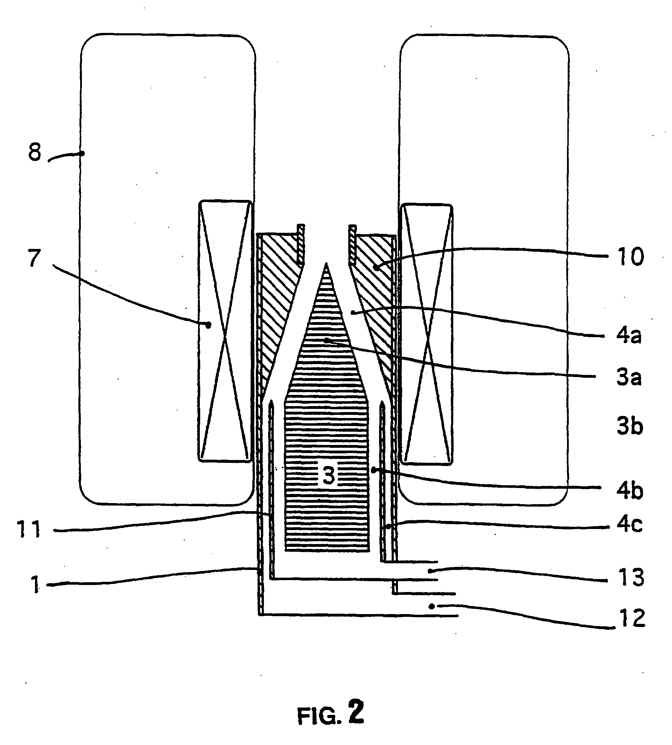

La figure 2 donne un autre mode de réalisation de l'invention, dans lequel le flux magnétique variable est en plus obtenu en faisant varier la forme de la section droite de l'écoulement; la récupération des particules est effectuée par déflecteur.
L'enveloppe extérieure (1) comporte, dans sa partie supérieure, une forme en tronc de cône divergent (10) dans laquelle vient prendre place la partie supérieure conique (3a) du noyau (3), délimitant ainsi une portion d'écoulement annulaire conique divergent (4a). La partie supérieure conique (3a) est prolongée à sa partie inférieure par une partie cylindrique (3b), concentrique à l'enveloppe extérieure (1), délimitant une portion d'écoulement annulaire circulaire (4b,c) de forme constante.
L'enveloppe extérieure (1) est entourée par une bobine (7) dont la partie médiane se situe à hauteur de l'écoulement annulaire conique supérieur (4a). La bobine crée un champ continu statique dirigé verticalement, son sens étant indifférent.
La partie médiane de la bobine correspondant à la portion d'écoulement conique (4a) délivre un champ magnétique maximum et ne présentant pratiquement pas ou peu de gradient spatial. Ainsi le flux magnétique hétérogène dans l'écoulement, donc la déviation des inclusions, est obtenu par la variation de la forme de la section droite de l'écoulement grâce à sa forme conique.
Dans le cas de la figure, avec cône divergent, la variation de flux est positive et les inclusions sont déviées vers la paroi extérieure de l'écoulement conique.

La séparation des inclusions se fait à l'aide d'un déflecteur (11) qui sépare l'écoulement en deux flux à la sortie de la portion conique d'écoulement (4a), le flux extérieur (4c) chargé en inclusions déviées, le flux intérieur (4b) épuré. Le flux chargé (4c) en inclusions est récupéré en (12) et le flux épuré en (13).

Il est à noter que le long d'un écoulement de métal il est possible de mettre en oeuvre plusieurs champs magnétiques successifs pour compléter le traitement d'une partie de l'écoulement, par exemple le flux contenant les impuretés afin de les concentrer, ou le flux épuré pour améliorer encore son épuration, si nécessaire.
Un autre aspect de l'invention est un dispositif de séparation d'inclusions contenues dans un écoulement de liquide conducteur électrique, les inclusions et le liquide ayant des conductivités électriques différentes, comprenant un moyen, ou conteneur, pour canaliser l'écoulement, un moyen magnétique pour créer un flux magnétique hétérogène continu dans ledit écoulement; ce moyen comprend généralement au moins un, ou une paire d'aimant(s) permanent(s) ou d'électro-aimant(s) à courant continu, ou une bobine à courant continu entourant le conteneur, ledit électro-aimant ou ladite bobine étant avantageusement supraconducteurs.

Le flux magnétique hétérogène peut être obtenu à l'aide d'un moyen magnétique produisant un gradient spatial de champ magnétique statique continu au sein de l'écoulement ou à l'aide d'un conteneur comportant des moyens faisant varier la forme de la section droite le long dudit écoulement; ces deux moyens peuvent être combinés.

## Revendications

1. Procédé de séparation d'inclusions contenues dans un écoulement liquide conducteur électrique (4, 4a), les inclusions et le liquide ayant des conductivités électriques différentes, à l'aide de forces électromagnétiques, procédé dans lequel on produit un champ magnétique statique continu, on produit un courant électrique dans ledit liquide, on fait circuler ledit écoulement (4, 4a) dans ledit champ et on fait agir ledit champ magnétique sur ledit courant électrique de manière à produire des forces électromagnétiques qui exercent une pression sur lesdites inclusions suffisante pour entraîner leur déplacement au sein du dit liquide, ledit procédé étant **caractérisé en ce que** l'on soumet ledit écoulement (4, 4a) à un flux magnétique hétérogène variable dans l'espace de manière à induire ledit courant électrique au sein du dit écoulement, ledit flux magnétique résultant dudit champ magnétique.

2. Procédé selon la revendication 1 **caractérisé en ce que** le flux hétérogène variable dans l'espace et l'écoulement de métal liquide (4, 4a) sont tels que la variation de flux dans ledit écoulement (4, 4a) est supérieure à 25.10⁻⁶ Wb/s.

3. Procédé selon l'une quelconque des revendications 1 ou 2 **caractérisé en ce que** le flux magnétique hétérogène est obtenu à l'aide d'une variation spatiale du champ magnétique dans l'écoulement (4, 4a).

4. Procédé selon l'une quelconque des revendications 1 à 3, **caractérisé en ce que** l'écoulement (4, 4a) est annulaire.

5. Procédé selon l'une quelconque des revendications 1 à 2, **caractérisé en ce que** ledit flux magnétique hétérogène est obtenu en faisant varier la forme de la section de l'écoulement (4a) le long du dit écoulement.

6. Procédé selon l'une quelconque des revendications 1 ou 2 **caractérisé en ce que** l'on combine les moyens des revendications 3 et 5.

7. Procédé selon la revendication 6 **caractérisé en ce que** l'écoulement annulaire (4) a une forme de section constante le long de l'écoulement.

8. Procédé selon l'une quelconque des revendications 1 à 6 **caractérisé en ce que** l'écoulement (4a) est conique.

9. Procédé selon l'une quelconque des revendications 1 à 8 **caractérisé en ce que** le champ magnétique est obtenu à l'aide d'au moins un électro-aimant ou une bobine (7) entourant l'écoulement, alimentés en courant continu, de préférence un électro-aimant ou une bobine supraconductrice.

10. Procédé selon l'une quelconque des revendications 1 à 9, **caractérisé en ce que** ledit liquide est un métal.

11. Dispositif pour séparer des inclusions d'un écoulement (4, 4a) de métal liquide à l'aide de forces électromagnétiques, comprenant au moins un moyen magnétique (7) pour créer un champ magnétique statique continu, un moyen pour produire un courant électrique au sein dudit écoulement et un moyen d'écoulement (1, 3, 3a, 10) pour faire circuler ledit écoulement dans ledit champ magnétique, ledit champ magnétique étant tel qu'il agit sur ledit courant de manière à produire des forces électromagnétiques qui exercent une pression sur lesdites inclusions suffisante pour entraîner leur déplacement au sein du dit métal liquide, ledit dispositif étant **caractérisé en ce que** ledit écoulement (4, 4a) est soumis à un flux magnétique hétérogène variable dans l'espace de manière à induire ledit courant électrique au sein du dit écoulement, ledit flux magnétique résultant dudit champ magnétique.

12. Dispositif selon la revendication 11 **caractérisé en ce que** ledit au moins un moyen magnétique comprend au moins une bobine (7) entourant l'écoulement (4, 4a) parcourue par un courant électrique continu et **en ce que** ladite bobine produit un champ magnétique hétérogène variable dans l'écoulement.

13. Dispositif selon l'une quelconque des revendications 11 ou 12 **caractérisé en ce que** le moyen d'écoulement (1, 3) a une section droite annulaire.

14. Dispositif selon l'une des revendications 11 ou 12, **caractérisé en ce que** la section droite du dit moyen d'écoulement (1, 3, 3a, 10) est variable le long de l'écoulement de manière à soumettre ledit écoulement (4, 4a) à un flux magnétique hétérogène variable dans l'espace.

15. Dispositif selon la revendication 14, **caractérisé en ce que** le moyen d'écoulement (3a, 10) est de forme conique dans le sens de l'écoulement et permet d'obtenir le flux magnétique hétérogène.

## Patentansprüche

1. Verfahren zur Trennung von Einschlüssen aus einem elektrisch leitenden Flüssigkeitsstrom (4, 4a) unter Verwendung elektromagnetischer Kräfte, wobei Einschlüsse und Flüssigkeit unterschiedliche elektrische Leitfähigkeiten haben, Verfahren, bei dem man ein durchgehendes statisches Magnetfeld erzeugt, einen elektrischen Strom in der Flüssigkeit erzeugt, den Flüssigkeitsstrom (4, 4a) in dem Feld zirkulieren lässt und das Magnetfeld auf den elektrischen Strom einwirken lässt, so dass elektromagnetische Kräfte erzeugt werden, die auf die Einschlüsse einen Druck ausüben, der ausreicht, um sie innerhalb der Flüssigkeit in Bewegung zu versetzen, wobei das Verfahren **dadurch gekennzeichnet ist, dass** der Flüssigkeitsstrom (4, 4a) einem räumlich veränderlichen heterogenen Magnetfluss ausgesetzt wird, um den elektrischen Strom innerhalb des Flüssigkeitsstroms zu erzeugen, wobei der Magnetfluss aus dem Magnetfeld resultiert.

2. Verfahren nach Anspruch 1, **dadurch gekennzeichnet, dass** der räumlich veränderliche heterogene Magnetfluss und der Flüssigmetallstrom (4, 4a) so beschaffen sind, dass die Magnetflussveränderung in dem Strom (4, 4a) größer als 25.10⁻⁶ Wb/s ist.

3. Verfahren nach einem der Ansprüche 1 oder 2, **dadurch gekennzeichnet, dass** der heterogene Magnetfluss durch eine räumliche Veränderung des Magnetfelds im Flüssigkeitsstrom (4, 4a) erzeugt wird.

4. Verfahren nach einem der Ansprüche 1 bis 3, **dadurch gekennzeichnet, dass** der Flüssigkeitsstrom (4, 4a) ringförmig ist.

5. Verfahren nach einem der Ansprüche 1 bis 2, **dadurch gekennzeichnet, dass** der heterogene Magnetfluss dadurch erzeugt wird, dass die Querschnittsform des Flüssigkeitsstroms (4a) längs des Flüssigkeitsstroms verändert wird.

6. Verfahren nach einem der Ansprüche 1 oder 2, **dadurch gekennzeichnet, dass** die Mittel der Ansprüche 3 und 5 kombiniert werden.

7. Verfahren nach Anspruch 6, **dadurch gekennzeichnet, dass** der ringförmige Flüssigkeitsstrom (4) eine längs des Flüssigkeitsstroms konstante Querschnittsform hat.

8. Verfahren nach einem der Ansprüche 1 bis 6, **dadurch gekennzeichnet, dass** der Flüssigkeitsstrom (4a) kegelförmig ist.

9. Verfahren nach einem der Ansprüche 1 bis 8, **dadurch gekennzeichnet, dass** das Magnetfeld mit mindestens einem Elektromagneten oder einer den Flüssigkeitsstrom umgebenden Spule (7), die mit Gleichstrom versorgt werden, vorzugsweise mit einem Elektromagneten oder einer supraleitenden Spule, erzeugt wird.

10. Verfahren nach einem der Ansprüche 1 bis 9, **dadurch gekennzeichnet, dass** die Flüssigkeit ein Metall ist.

11. Vorrichtung zur Trennung von Einschlüssen aus einem Flüssigmetallstrom (4, 4a) unter Verwendung elektromagnetischer Kräfte, umfassend mindestens ein magnetisches Mittel (7) zur Erzeugung eines durchgehenden statischen Magnetfelds, ein Mittel zur Erzeugung eines elektrischen Stroms innerhalb des Flüssigmetallstroms und ein Strömungsmittel (1, 3, 3a, 10), um den Flüssigkeitsstrom in dem Magnetfeld zirkulieren zu lassen, wobei das Magnetfeld so beschaffen ist, dass es auf den elektrischen Strom so einwirkt, dass dabei elektromagnetische Kräfte erzeugt werden, die auf die Einschlüsse einen Druck ausüben, der ausreicht, um sie innerhalb des Flüssigmetalls in Bewegung zu versetzen, wobei die Vorrichtung **dadurch gekennzeichnet ist, dass** der Flüssigkeitsstrom (4, 4a) einem räumlich veränderlichen heterogenen Magnetfluss ausgesetzt wird, um den elektrischen Strom innerhalb des Flüssigmetallstroms zu erzeugen wird, wobei der Magnetfluss aus dem Magnetfeld resultiert.

12. Vorrichtung nach Anspruch 11, **dadurch gekennzeichnet, dass** das mindestens eine magnetische Mittel mindestens eine den Flüssigkeitsstrom (4, 4a) umgebende Spule (7) umfasst, die von einem elektrischen Gleichstrom durchflossen wird, und dass die Spule ein veränderliches heterogenes Magnetfeld in dem Flüssigkeitsstrom erzeugt.

13. Vorrichtung nach einem der Ansprüche 11 oder 12, **dadurch gekennzeichnet, dass** das Strömungsmittel (1, 3) einen ringförmigen Querschnitt hat.

14. Vorrichtung nach einem der Ansprüche 11 oder 12, **dadurch gekennzeichnet, dass** der Querschnitt des Strömungsmittels (1, 3, 3a, 10) längs des Flüssigkeitsstroms veränderlich ist, so dass der Flüssigkeitsstrom (4, 4a) einem räumlich veränderlichen heterogenen Magnetfluss ausgesetzt wird.

15. Vorrichtung nach Anspruch 14, **dadurch gekennzeichnet, dass** das Strömungsmittel (3a, 10) in Strömungsrichtung kegelförmig ist und die Erzeugung des heterogenen Magnetflusses ermöglicht.

## Claims

1. Process for separation of inclusions contained in an electricity conducting liquid stream (4, 4a), the inclusions and the liquid having different electrical conductivities, by means of electromagnetic forces, process in which a static, continuous magnetic field is produced, an electric current is produced in said liquid, said stream (4, 4a) is being circulated in said field and said magnetic field is made to act on said electric current so as to produce electromagnetic forces which exert a pressure on said inclusions which is sufficient to cause their moving within said liquid, said process being **characterized in that** said stream (4, 4a) is subjected to a heterogeneous magnetic flux which is variable in space, so as to induce said electric current within said stream, said magnetic flux being the result of said magnetic field.

2. Process according to claim 1, **characterized in that** the heterogeneous flux variable in space and the liquid metal stream (4, 4a) are such that the flux variation in the said stream (4, 4a) exceeds 25.10⁻⁶ Wb/s.

3. Process according to any one of claims 1 or 2, **characterized in that** the heterogeneous magnetic flux is obtained by a spatial variation of the magnetic field in the stream (4, 4a).

4. Process according to any one of claims 1 to 3, **characterized in that** the stream (4, 4a) is annular.

5. Process according to any one of claims 1 to 2, **characterized in that** the heterogeneous magnetic flux is obtained by varying the shape of the cross-section of the stream (4a) along said stream.

6. Process according to any one of claims 1 or 2, **characterized in that** the means in claims 3 and 5 are combined.

7. Process according to claim 6, **characterized in that** the annular stream (4) has a shape whose cross-section is constant along the stream.

8. Process according to any one of claims 1 to 6, **characterized in that** the stream (4a) is conical.

9. Process according to any one of claims 1 to 8, **characterized in that** the magnetic field is obtained by means of at least one electromagnet or coil (7) surrounding the stream, with a DC power supply, preferably a superconducting electromagnet or coil.

10. Process according to any one of claims 1 to 9, **characterized in that** said liquid is a metal.

11. Device for separating the inclusions from a liquid metal stream (4, 4a) by means of electromagnetic forces, comprising at least one magnetic means (7) for producing a static, continuous magnetic field, a means for producing an electric current within said stream and a flow means (1, 3, 3a, 10) for circulating said stream in said magnetic field, said magnetic field being such that it acts on said current so as to produce electromagnetic forces which exert a pressure on said inclusions which is sufficient to cause their moving within said liquid metal, said device being **characterized in that** said stream (4, 4a) is subjected to a heterogeneous magnetic flux which is variable is space so as to induce said electric current within said stream, said magnetic flux being the result of said magnetic field.

12. Device according to claim 11, **characterized in that** said at least one magnetic means comprises at least one coil (7) surrounding the stream (4, 4a) through which a continuous electrical current passes and **in that** said coil produces a heterogeneous magnetic field which is variable in the stream.

13. Device according to any one of claims 11 or 12, **characterized in that** said flow means (1, 3) has an annular cross-section.

14. Device according to one of claims 11 or 12, **characterized in that** the cross-section of said flow means (1, 3, 3a, 10) is variable along the stream so as to subject said stream (4, 4a) to a heterogeneous magnetic flux which is variable in space.

15. Device according to claim 14, **characterized in that** the flow means (3a, 10) has a conical shape in the direction of the stream and enables to obtain the heterogeneous magnetic flux.
